# FASCICULE DE BREVET EUROPEEN

(11) **EP 2 576 478 B1**
(45) Date de publication et mention de la délivrance du brevet: **23.11.2016**
(21) Numéro de dépôt: 11728360.6
(22) Date de dépôt: 06.06.2011
(51) Int. Cl.: C04B 28/06, C04B 28/16, C04B 111/60, C04B 28/14

(54) **LIANT HYDRAULIQUE OU MORTIER A VOLUME STABLE**
HYDRAULISCHER BINDER ODER MÖRTEL MIT STABILEM VOLUMEN
HYDRAULIC BINDER OR MORTAR HAVING A STABLE VOLUME

(30) Priorité: 04.06.2010 FR 1054410
(43) Date de publication de la demande: 10.04.2013
(73) Titulaire: Saint-Gobain Weber, 77170 Servon (FR)
(72) Inventeur: FAMY, Charlotte, F-60500 Chantilly (FR); MUELLER, Christian, CH-8038 Zurich (CH)
(74) Mandataire: Saint-Gobain Recherche
(86) Numéro de dépôt international: PCT/FR2011/051276
(87) Numéro de publication internationale: WO 2011/151608

(56) Documents cités:
- EP-A1- 1 384 704
- WO-A1-2004/101464
- FR-A1- 2 868 772
- "Particles Size", The Engineering Toolbox , 1 août 2009 (2009-08-01), XP000002657076, Extrait de l'Internet: URL:www.engineeringtoolbox.com/particle-si zes-d_934.html [extrait le 2011-08-18]

## Description

La présente invention concerne notamment un liant hydraulique ou un mortier à volume stable fabriqué à partir d'un tel liant hydraulique, pour, en particulier, le ragréage et le lissage des sols, la confection d'ouvrage de nivellement, de chape, le dressage des sols, la réparation d'ouvrage en béton, le scellement d'éléments (tiges d'ancrage, piliers, bornes, poteaux, bouches d'égouts, tampons de regards ou le clavage ou le clavetage), et la pose et/ou le jointoiement de carreaux, tels que des carreaux de céramique ou de verre.

Les professionnels du bâtiment sont à la recherche actuellement de liants ou mortiers fabriqués à partir de ces liants à volume stable notamment durant la cure et le durcissement du liant ou mortier gâché et appliqué sur un support mais aussi durant la vie en service du mortier. Pour certaines applications, et en particulier le ragréage et lissage des sols, le collage ou le jointement des carrelages, ou la réparation d'ouvrage en béton ou le scellement d'éléments, on cherche à utiliser des matériaux cimentaires dont le changement de volume aussi bien en expansion qu'en retrait est très limité, et ce, de la pose au durcissement définitif du liant ou mortier ; mais aussi lors de la vie en service du mortier.

Pour le ragréage, il est connu d'utiliser, par exemples, des mortiers pour chapes ou des mortiers de lissage, qui requièrent une préparation des sols minutieuse avant la pose du produit à base cimentaire pour nettoyer le substrat et égaliser le sol (nivellement). Après le durcissement, ces mortiers sont recouverts de moquette, d'un revêtement plastique ou d'un parquet. Lors de la phase de durcissement (c'est-à-dire la cure), ces mortiers sont sensibles à l'évaporation de l'eau contenue dans leur formule. Une évaporation trop importante d'eau génère de forts gradients dimensionnels dans le mortier, provoquant la fissuration de ce dernier. Ces gradients dimensionnels sont du retrait dégradant fortement les propriétés mécaniques du mortier. Pour éviter l'évaporation d'eau lors de la cure, il est demandé de développer des mortiers à prise et durcissement rapides avec retrait compensé. Ces mortiers doivent permettre de limiter, voire supprimer l'évaporation d'eau tout en diminuant la durée du chantier car la période de recouvrement du mortier est plus courte, et ce parce que la consommation d'eau du mortier est plus rapide de part la chimie du système. On connaît donc une forte demande pour des produits à prise et durcissement rapides à retrait compensé, plus tolérants aux conditions d'application (minimum de préparation des sols avant l'application) possédant une forte stabilité volumique dans des conditions d'utilisation normales (humidités variables de 0 à 100%).

Par ailleurs, les produits pour la pose des carreaux, comme par exemple les colles à carrelage telles que les mortiers colle, ou pour le jointoiement, comme par exemple les mortiers de jointoiement (encore appelés mortiers joint), consistent le plus souvent en un mélange complexe de différents ingrédients dont, notamment, un liant minéral du type ciment, du sable et des additifs organiques, destinés à améliorer les propriétés d'adhésion, de flexibilité et de rétention d'eau du produit de pose ou de jointoiement concerné. On connaît de la société déposante, une gamme étendue de colles à carrelage et de mortiers de jointoiement permettant la pose de carrelage et la finition aussi bien en intérieur, qu'en extérieur, et sur différents types de supports, comme par exemple des murs, des sols, des piscines et/ou des bassins. La nature du support, tout comme la composition des carreaux, conditionnent le choix des produits de pose et de finition :
- La nature de l'emplacement sur lequel la pose des carreaux est réalisée entraîne des contraintes en terme de glissement lors de la pose, d'exposition à l'eau, au trafic et/ou aux agents chimiques agressifs. Il est donc important d'utiliser le bon produit prévu pour une utilisation particulière.
- La nature des carreaux utilisés, notamment en terme d'absorption d'eau due à la porosité ou de format, conditionne là encore le choix de la colle à carrelage et du produit pour le jointement. Dans ce cadre et pour donner une idée de la grande variété des matériaux existants, on peut citer, d'une part, les carreaux en céramique, c'est-à-dire par exemple en faïence, en grès, en terre cuite, ou émaillé, d'autre part, les carreaux en pierre naturelle, c'est-à-dire par exemple en marbre, en granit ou en pierres calcaires, ou bien encore, les carreaux en pâte de verre, de verre ou en pierre reconstituée.

Compte tenu de cette importante diversité, on connaît une forte demande pour des liant ou mortiers polyvalents pour toutes ces applications carrelages, et à même d'éviter le retrait ou l'expansion du liant ou du mortier pour garder le maximum d'adhérence, réduire au maximum les contraintes à l'interface mortier/carreau et conserver l'étanchéité du carrelage.

Des exigences similaires en terme d'exposition aux produits chimiques et à l'eau sont également requises pour les applications mortier de réparation, qui doivent en outre permettre de combler facilement et rapidement les défauts d'éléments en béton, notamment les fissures, en permettant à l'opérateur de procéder en une seule fois sans qu'il soit nécessaire d'appliquer plusieurs couches (en attendant le durcissement de chacune), tout en offrant un raccord parfait avec le support cimentaire d'origine.

Les liants ou mortiers de scellement doivent pour leur part, de plus, assurer une excellente tenue mécanique. Par suite, tout défaut dans la structure engendré dans le matériau par un changement de volume est à proscrire car il détériorerait totalement la structure.

Bien que les liants, colles ou mortiers actuellement disponibles soient très performants, il n'est pas aisé de contrôler leur expansion ou leur retrait durant la prise du liant (et leur vie en service) qu'ils contiennent pour éviter de dégrader irrémédiablement les propriétés mécaniques du produit fini.

Il est en particulier important de pouvoir contrôler le mécanisme et la cinétique d'hydratation du liant, afin de former les hydrates adéquats à temps voulu. Par exemple, il est crucial de contrôler la formation d'ettringite du jeune age aux ages tardifs, c'est-à-dire du stade de la pose (application du mortier) à celui du matériau fini et mis en service. Lors de la première heure suivant la gâchée, la formation précoce d'ettringite permet un prise courte. La majorité de l'ettringite se forme lors du durcissement générant un développement rapide des résistances mécaniques (quelques jours suivant la gâchée). La formation contrôlée de l'ettringite à une phase précoce du durcissement du mortier génère une légère expansion dimensionnelle compensant le retrait du mortier après sa pose. C'est une des qualités remarquables de l'ettringite d'agir comme agent de retrait compensé aux jeunes ages.

En combinaison avec ce qui est précisé ci-dessus, la formation d'ettringite doit devenir faible, voire inexistante, après le durcissement (c'est-à-dire après plusieurs jours suivant la gâchée), et notamment après 28 jours de durcissement, pour ne pas entraîner d'expansion excessive et en conséquence des ruptures dans le matériau. L'expansion excessive est provoquée par la croissance massive de cristaux d'ettringite au sein du matériau cimentaire durci.

Dans toutes les applications citées ci-dessus, il est nécessaire d'avoir un mortier dont le volume est stable des jeunes âges aux âges avancés, notamment durant la vie en service dans différentes conditions d'utilisation (humidité variable, présence d'eau...), et ainsi il est nécessaire de contrôler la formation d'ettringuite à tous les stades pour que globalement les changements du volume du mortier soient très faibles.

On connaît de la demande de brevet CN101555106A, l'utilisation d'un mélange ternaire à base de sulfoaluminate de calcium, de ciment Portland et de gypse pour la réalisation de mortier autonivelant (plus connu sous la démonination anglaise « self leveling mortar »). Cependant la stabilité dimensionnelle dans le temps de tels mortiers est peu compatible avec en particulier les utilisations cimentaires précitées. En effet, on observe, après 28 jours de prises des mortiers cités dans cette demande, un taux de retrait augmentant au-delà de 0.1% (c'est-à-dire > 1 mm/m) et des performances en terme de résistance mécanique fortement dégradées menaçant l'intégrité du produit.

On connaît, d'autre part, de la demande WO 02/098815 l'utilisation d'un mélange ternaire à base de sulfoaluminate de calcium, de ciment Portland et d'une source de sulfate de calcium pour la fabrication de plaques à base de liant cimentaire.

La demande WO2004/101464 décrit l'utilisation d'un liant à base de sulfate de calcium et de résidus de verres recyclés pour la fabrication de chapes.

Les inventeurs ont cherché à mettre au point un liant ou mortier limitant les phénomènes d'expansion ou de retrait lors de la vie en service du produit qui peut être d'au moins 50 ans. Ce produit devant être pratique à manipuler, à appliquer et/ou à lisser selon notamment des méthodes courantes.

A cet effet la présente invention propose un liant hydraulique à volume stable, destiné de préférence pour le ragréage et le lissage des sols, pour la réparation ou le scellement d'éléments, et/ou pour le collage ou le jointement des carrelages, et comprenant, avant gâchage, un clinker de sulfoaluminate de calcium (abrégé en C.$.A.), un ciment Portland (abrégé en OPC), une source de sulfate de calcium (abrégé en C.$.), et une source de carbonate métallique formée de grains dont la finesse D50 varie de 1 à 40 µm et choisie parmi au moins une source de carbonate de magnésium et une source de carbonate de calcium, dans les proportions définies ci-après, bornes comprises, exprimées en rapport des masses de ces constituants dans ledit liant :
(Ciment Portland) / (Clinker de sulfoaluminate de calcium) : 0.05 - 1.45
(Source de sulfate de calcium) / (Clinker de sulfoaluminate de calcium) : 0 - 1.5 en excluant la borne 0
(Clinker de sulfoaluminate de calcium) / (Source de carbonate métallique) : 0.3-4

Dans le cadre de l'invention, on utilise le terme liant hydraulique ou mortier pour désigner indifféremment les liants ou mortiers pulvérulents ou les liants ou mortiers directement prêt à l'emploi, c'est-à-dire sans addition d'eau.

Les inventeurs ont mis en évidence de manière complètement inattendue que les phénomènes indésirables d'expansion ou de retrait lors de leur exposition aux conditions d'utilisation (humidité relative variant de 0 à 100%), peuvent être évités grâce à l'emploi du liant hydraulique selon l'invention. De plus, le mortier comportant le liant hydraulique selon l'invention a une rhéologie après gâchage tout à fait appropriée pour les utilisations recherchée, et est stable par rapport à la formation d'ettringite dans les conditions d'utilisation normales pour ces applications.

Du au fait qu'aucune instabilité dimensionnelle (expansion ou retrait) du mortier avec le liant hydraulique précité dans le cadre de l'invention n'est observée lors de la vie en service de ce produit, on obtient un revêtement qui adhère parfaitement au support, apporte des performances mécaniques en compression et flexion satisfaisantes tout en protégeant le support ou le revêtement de l'humidité et/ou des produits chimiques. La stabilité dimensionnelle d'un tel liant hydraulique permet également de garder un nivellement stable sans fluage ou fissuration du sol. On observe en outre qu'avantageusement le mortier avec le liant hydraulique durci ne présente ni de fissures, ni de failles : il reste donc complètement étanche et résiste bien aux agressions chimiques, telles que celles susceptibles d'être provoquées par les acides, les bases ou encore certains solvants organiques. Ce mortier avec le liant hydraulique est aussi plus résistant aux chocs et aux sollicitations mécaniques grâce à l'absence de fissures ou de failles, et permet par suite de garantir une meilleur tenue et une plus grande longévité du matériau cimentaire.

D50 signifie que 50% en poids des éléments granulaires ont une taille de grains inférieure ou égale à la valeur donnée, la taille de grains étant mesurée par comparaison à la taille des mailles d'un tamis de dimension choisie ou par granulométrie LASER.

Le ratio (Ciment Portland) / (Clinker de sulfoaluminate de calcium) du liant hydraulique selon l'invention varie de préférence de 0.10 à 1.2, avantageusement de 0.20 à 1, voire de 0.3 à 0.9, de manière encore d'avantage préférée de 0.4 à 0.8 et, voire même encore, de 0.6 à 0.7. De préférence, le ratio du (Ciment Portland) / (Clinker de sulfoaluminate de calcium) du liant hydraulique selon l'invention peut être inférieur à 1.2 voire à 1.

Le ratio (Source de sulfate de calcium) / (Clinker de sulfoaluminate de calcium) du liant hydraulique selon l'invention varie de préférence de 0.10 à 1.2, avantageusement de 0.13 à 1, voire de 0.2 à 0.7, et de manière encore d'avantage préférée de 0.3 à 0.6. De préférence le ratio (Source de sulfate de calcium) / (Clinker de sulfoaluminate de calcium) du liant hydraulique selon l'invention peut être inférieur à 0.6 voire à 0.3.

Le ratio (Clinker de sulfoaluminate de calcium) / (Source de carbonate métallique) du hydraulique selon l'invention varie de préférence de 0.4 à 3, avantageusement de 0.5 à 2.5, voire de 0.7 à 2, et de manière encore d'avantage préférée de 1 à 1.7.

Toutes les combinaisons possibles des ratios énumérées ci-dessus font également partie de la présente invention.

Par clinker de sulfoaluminate de calcium, il faut comprendre tout matériau comprenant les phases minérales suivantes :
- de la yeelimite : C₄A₃$, ou des solutions solides de C₄AxFy$z.
- éventuellement de la belite (ou silicate bicalcique) : C₂S, ou des solutions solides de C₂S et F
- éventuellement de la ferrite (ou ferro-aluminate tétracalcique) : C₄AF, ou des solutions solide de C₆A(1-x)F₍₂₊ₓ₎
- éventuellement du C₃FT ou du CT ou du C₄FT2.
- éventuellement du CA (monoaluminate de calcium)

Il est également possible que le clinker de sulfoaluminate de calcium contienne de la chaux libre (CaO), du C₁₂A₇ et/ou du C$. Toutes les combinaisons des ingrédients cités précédemment dans le cadre de la composition de clinker de sulfoaluminate sont également possibles.

Ce type de clinker de sulfoaluminate de calcium est communément désigné par l'appellation « C.$.A. ». On peut par exemple citer le produit Calumex C.S.A.® commercialisé par la société CALTRA NEDERLAND BV.

Dans le domaine des ciments on utilise couramment des abréviations à une lettre pour désigner les groupements chimiques, dans le cadre de l'invention on utilisera la notation suivante : C pour CaO, A pour Al₂O₃, H pour H₂O, $ pour SO₃, F pour FeO, T pour TiO₂, et S pour SiO₂.

De préférence, le clinker de sulfoaluminate de calcium du liant hydraulique à volume stable décrit précédemment comprend de la yeelimite dans une teneur variant de 25 à 80 % en poids total du clinker, avantageusement de 35 à 70 %, et voire même de 45 à 65 %.

De préférence, le clinker de sulfoaluminate de calcium comprend de la belite dans une teneur inférieure ou égale à 60 % en poids total dudit clinker, avantageusement inférieure ou égale à 50 %, et voire même inférieure ou égale à 30 %.

Par ciment Portland on désigne indifféremment tout ciment de mélange comme défini dans la norme EN 197-1:2000, tels que les mélanges de ciment Portland ou les ciments de mélange pouzzolaniques pouvant comprendre seuls ou en combinaison, des cendres volantes, des laitiers de hauts fourneaux, ainsi que des pouzzolanes naturelles ou calcinées, du métakaolin et des fillers calcaires.

Toutes les combinaisons des ciments cités dans la norme EN 197-1 sont également possibles pour préparer le liant hydraulique tel que précédemment définit dans le cadre de l'invention.

De préférence, le ciment Portland est sélectionné parmi au moins l'un des ciments suivants : un ciment Portland CEM I 52.5 N et R (norme EN 197-1), et un ciment Portland CEM I 42.5 N et R (norme EN 197-1).

De préférence, le ciment Portland du liant hydraulique selon l'invention est sélectionné parmi au moins un ciment de mélange du type CEM II, CEM III, CEM IV et CEM V complété éventuellement par l'ajout d'un laitier de haut-fourneau, des cendres volantes, du calcaire, de l'argile calcinée, des pouzzolanes naturelles et/ou de la fumée de silice.

La source de sulfate de calcium entrant dans la composition du liant hydraulique de l'invention est choisie de préférence parmi au moins l'un des constituants suivants : du gypse, de l'hémihydrate (plâtre), du phosphogypse et de l'anhydrite. De manière plus préférée, la source de sulfate de calcium est sélectionnée parmi au moins l'un des constituants suivants : du gypse, de l'hémihydrate et de l'anhydrite, et avantageusement il s'agit du gypse seul ou avec l'hémihydrate et de l'anhydrite.

De préférence la source de carbonate métallique est choisie parmi au moins l'un des composés suivants : une charge ou « filler » calcaire (carbonate de calcium) et de la dolomite. Dans le cadre de l'invention le terme charge doit être compris comme faisant référence à des composés qui peuvent être potentiellement réactif. Ces sources de carbonate métallique sont formées de grains dont la finesse D50 varie de préférence de 2 à 20 µm, voire même de 4 à 10 µm.

De telles sources de carbonate sont particulièrement avantageuses à utiliser comme matières premières comptes tenus de leur faible coût.

Le mortier avec le liant hydraulique selon l'invention peut comprendre en outre un ou des retardateurs, tel que l'acide tartrique, l'acide citrique et/ou acide borique. Il peut aussi comprendre un ou des additifs accélérateurs, comme au moins un carbonate de métal alcalin, par exemple le carbonate de lithium, le carbonate de sodium et/ou le carbonate de potassium. Au moins un agent épaississant peut également être ajouté dans la composition du mortier pour ajuster la consistance et la fluidité de la pate. Au moins un agent superplastifiant peut être ajouté au mélange pour modifier la rhéologie de la pate afin de la fluidifier et permettre son étalement sur le substrat. Au moins un rétenteur d'eau peut également être ajouté dans le mortier avec le liant hydraulique selon la présente invention. Les rétenteurs d'eau limitent l'évaporation d'eau et l'adsorption d'eau par le substrat. L'eau de gâchage est alors complètement utilisée pour l'hydratation et permet un bon développement des résistances mécaniques.

De même, le mortier avec le liant hydraulique selon l'invention peut comprendre au moins l'un des éléments sélectionnés parmi un latex, une poudre de résine redispersable (dans l'eau ou d'autres solvants).

La présente invention concerne aussi un mortier à volume stable comprenant un liant hydraulique tel que défini précédemment dans le cadre de l'invention.

Le mortier à volume stable selon l'invention comprend de préférence un sable notamment siliceux et/ou de calcaire (broyé) sélectionné parmi des sables de taille des particules variant de 0.05 à 4 mm, et de préférence de 0.05 à 0.5 mm.

Avantageusement le mortier à volume stable selon l'invention comprend au moins l'un des sables notamment siliceux et/ou de calcaire (broyé) sélectionné parmi des sables de taille de particules variant de 0.1 à 0.3 mm, et voire même parmi des sables de taille variant de 0.15 à 0.25 mm.

Le mortier pulvérulent à volume stable selon l'invention, peut comprendre:
- de 20 à 60% en poids (poids total du mortier pulvérulent) du liant hydraulique,
- de 35 à 80% en poids (poids total du mortier pulvérulent) de sable(s), notamment siliceux.

Le mortier pulvérulent à volume stable selon l'invention peut comprendre au plus 40%, voire au plus 30%, en poids (poids total du mortier pulvérulent) du clinker de sulfoaluminate de calcium et au moins 10% en poids du clinker de sulfoaluminate de calcium.

Le mortier pulvérulent à volume stable selon l'invention peut comprendre au plus 30%, voire au plus 20%, en poids (poids total du mortier pulvérulent) du ciment Portland et au moins 0,5% voire au moins 1% en poids du ciment Portland.

Le mortier pulvérulent à volume stable selon l'invention peut comprendre au plus 10%, voire au plus 5%, en poids (poids total du mortier pulvérulent) de la source de sulfate de calcium, notamment comprenant du gypse, et au moins 0,5% voire 1% en poids de la source de sulfate de calcium

Le mortier pulvérulent à volume stable selon l'invention peut comprendre au plus 35% voire au plus 20% en poids (poids total du mortier pulvérulent) du carbonate métallique et au moins 3% voire 5% en poids du carbonate métallique.

Le mortier pulvérulent à volume stable selon l'invention peut comprendre en particulier:
- de 5 à 30% en poids (de mortier pulvérulent) du clinker de sulfoaluminate de calcium,
- de 1 à 30% en poids (de mortier pulvérulent) du ciment Portland,
- de 1 à 8% en poids (de mortier pulvérulent) de la source de sulfate de calcium, notamment comprenant du gypse (seul ou en mélange)
- de 5% à 30% en poids (de mortier pulvérulent) de la source de carbonate métallique (calcium et/ou magnésium)
- entre 35% et 60% en poids (de mortier pulvérulent) de sable(s) notamment siliceux et/ou de calcaire.

La présente invention concerne également une couche de ragréage obtenue à partir du mortier tel que défini précédemment dans le cadre de la présente invention.

La présente invention concerne aussi un sol comprenant une couche de ragréage tel que définie ci-dessus.

La présente invention concerne également une surface cimentaire réparée ou comprenant des parties scellées à l'aide d'un liant ou mortier tel que défini précédemment dans le cadre de la présente invention.

Le mortier selon l'invention permet de sceller fortement et durablement des éléments dans, par exemple, les sols, et sera avantageusement utilisé pour le scellement de tiges d'ancrage, de piliers, de bornes, de poteaux, de bouches d'égouts, et de tampons de regards, de clavage ou de clavetage.

La présente invention concerne encore un revêtement de carreaux collés sur un support et/ou assemblés entre eux à l'aide d'un liant ou mortier tel que défini précédemment dans le cadre de la présente invention.

Le support est par exemple une paroi intérieure d'une habitation telle qu'un mur de salle de bain. Il peut également s'agir d'une paroi d'un bassin de piscine. Le support peut également être en extérieur, comme par exemple une façade d'une habitation.

Dans ce cadre, la présente invention concerne une paroi comprenant un revêtement de carreaux tel que défini ci-dessus.

La présente invention et ses avantages seront mieux compris à la lecture des exemples qui suivent, uniquement donnés à titre illustratif et qui ne peuvent en aucun cas être considérés comme limitatifs.

### EXEMPLES :

La préparation des échantillons pour enduit de sol 1 à 4 est effectuée à partir des compositions du tableau 1 (à une température de 20°C). Le temps de prise et le comportement rhéologique sont ajustés avec des agents de rhéologie et des additifs retardateurs et accélérateurs.

Les échantillons 1 à 4 sont préparés selon la norme EN 196-1, en remplaçant le sable siliceux standard (normalisé) par les sables de quartz (sable siliceux) indiqué dans le tableau 1 ou en variante par du sable calcaire (obtenu par broyage).

Le mortier sec comprenant la composition cimentaire indiquée dans le tableau 1 pour chaque échantillon, est gâché avec de l'eau versée dans une quantité de 20 à 25% par rapport au poids total du mortier, à une température de 20°C et le tout est versé dans des moules normalisés permettant de réaliser 3 éprouvettes prismatiques de section carrée 4cmx4cm et de longueur 16cm. Les moules sont ensuite fermés hermétiquement et stockés à une humidité relative de 100%.

Après 4 heures de cure on procède au démoulage des échantillons et on les laisse 1 jour à une humidité relative de 100%. La longueur des éprouvettes après 4 heures de cure est mesurée et correspond à la longueur initiale. Ensuite les échantillons sont maintenus à 20°C à une humidité relative de 55% ou bien immergés dans l'eau à 20°C.

Le retrait est mesuré sur les échantillons stockés à 20°C et 55% d'humidité relative jusqu'à ce que les échantillons atteignent une valeur de retrait stable.

L'expansion, mesurée sur les échantillons immergés dans l'eau à 20°C, est suivie par intervalles de 1 à 7 jours jusqu'à ce qu'aucun changement de longueur des prismes ne soit plus observé (après approximativement 250 jours). La première mesure est effectuée 4 heures après gâchage (lors du démoulage). La seconde après 1 jour de gâchage puis 7 jours et ainsi de suite.

Pour l'expansion, comme pour le retrait, les mesures sont faites à l'aide du protocole et de l'appareillage, notamment d'un comparateur définis par la norme NF P 15-433. Le comparateur mesure l'allongement (ou l'expansion) ou le raccourcissement (ou le retrait) longitudinal des prismes de 16cm (de précision ±0.004mm).

Des tests d'étalement sont également réalisés à partir des échantillons 1 à 4 d'enduits de sol préparés selon la norme EN 196-1. Ce test permet de mesurer l'aptitude à l'étalement des enduits de sol, propriété nécessaire aux enduits de sol autonivellant. On place un cylindre en acier de 50 mm de diamètre pour une hauteur de 100 mm au centre d'une assiette plate. On remplit entièrement le cylindre avec la pâte obtenue 2 minutes après le gâchage. Puis on retire immédiatement le cylindre ce qui a pour effet l'étalement de la galette de pâte obtenue dans l'assiette. On attend 5 minutes, puis on mesure ensuite le diamètre de la pâte dans l'assiette à l'aide d'un compas de la marque FACOM (FACOM 300 mm).

Les résultats reportés dans le tableau 2 correspondent aux résultats moyennés sur trois prismes 4x4x16 cm ou trois mesures d'étalement.

**Tableau 1 : Compositions pondérales à partir desquelles les échantillons sont préparés**

| | Echantillon 1 comparatif | Echantillon 2 | Echantillon 3 | Echantillon 4 comparatif |
|---|---|---|---|---|
| **Gros Sable** | 46,06 | 52,17 | 43,16 | 51,16 |
| **Sable fin** | 8,2 | | 8,20 | 8,20 |
| **Charge calcaire** | 6 | | 8,00 | |
| **Charge Dolomite** | | 25,00 | | |
| **Clinker C.$.A.** | 12,15 | 14,00 | 17,90 | 17,90 |
| **Gypse** | 2,03 | 3,59 | 3,00 | 3,00 |
| **CEM I 52,5R** | 23,32 | | 17,50 | 17,50 |
| **CEM I 42.5R** | | 3,00 | | |
| **Acide tartrique** | 0,06 | 0,06 | 0,06 | 0,06 |
| **Carbonate de lithium** | 0,30 | 0,30 | 0,30 | 0,30 |
| **Epaississant** | 0,01 | 0,01 | 0,01 | 0,01 |
| **Résine redispersable** | 1.80 | 1,80 | 1,80 | 1,80 |
| **Agent rhéologique** | 0,07 | 0,07 | 0,07 | 0,07 |
| **TOTAL** | 100,00 | 100,00 | 100,00 | 100,00 |

**Tableau 2 : Résultats**

| | Echantillon 1 comparatif | Echantillon 2 | Echantillon 3 | Echantillon 4 comparatif |
|---|---|---|---|---|
| OPC/C.$.A. (poids) | 1,92 | 0,21 | 0,98 | 0,98 |
| C.$./C.$.A. (poids) | 0,13 | 0,20 | 0,13 | 0,13 |
| C.$.A./Charge (poids) | 2,03 | 0,56 | 2,24 | Pas de charge |
| Expansion dans l'eau à 20°C après 250 jours | Forte expansion >2 mm/m | Pas d'expansion <0.1 mm/m | Pas d'expansion <0.15 mm/m | Pas d'expansion <0.2 mm/m |
| Retrait dans l'air à 20°C après 250 jours | Fort retrait >1 mm/m | Peu de retrait <0.2 mm/m | Peu de retrait <0.25 mm/m | retrait <0.6 mm/m |
| Etalement (cm) | 15 | 15.5 | 15.3 | 14 |
| Comportement du mortier | Pas de ségrégation. Facile à pomper Bon nivellement. | Pas de ségrégation. Bon nivellement. | Pas de ségrégation. Bon nivellement. | Ségrégation. Difficulté à pomper |

Le comportement du mortier est évalué visuellement par l'opérateur pendant le gâchage et l'application du mortier sur un substrat du type support cimentaire. Si le mortier ségrégue (séparation des composants du mortier par gravimétrie) ou n'est pas pompable (par une pompe à béton telle que celles commercialisées par la société Putzmeister), il ne pourra pas s'appliquer correctement sur le support et donnera un matériau fini avec de mauvaises résistances.

Les ingrédients listés dans les tableaux 1 et 2 sont :
- pour le gros sable, il s'agit du sable siliceux commercialisé par la société Glaser Trockensand sous l'appellation « sable siliceux GT » (Glaser Quarzsand GT) de taille de particules variant entre 0.1 et 0.4 mm ;
- pour le sable fin, il s'agit du sable siliceux commercialisé par la société Strobel Quarzsand sous l'appellation « sable de silice cristallin » (Kristall Quarzsand) avec une teneur pondéral en SiO₂ supérieure à 99% et de taille de particules variant de 63 à 250 µm ;
- pour la charge calcaire, il s'agit de roche calcaire pulvérisée commercialisée par la société Karl Kraft Steinwerke et de type « Juracarb DI3 », consistant en la composition suivante donnée en pourcentages pondéraux : CaCO₃ (98.9%), Al₂O₃ (0.02%), MgCO₃ (0.6%), SiO₂ (0.3%) et Fe₂O₃ (0.06%) ; la finesse de cette charge calcaire exprimée en D50 est de 5 µm mesuré par granulomètre LASER ;
- pour la dolomite la finesse exprimée en D50 est de 19 µm ;
- pour le clinker C.$.A. (finesse exprimée en D50 de 10 µm), il s'agit du clinker commercialise par la société Caltra sous l'appellation Calumex^{®} C.$.A. et de composition : C₄A₃$: 75%, C₂S : 1.2%, C₃FT : 7%, C₂AS : 11.8%, CA : 4.7%, MgO : 0.3% ;pour le gypse (finesse exprimée en D50 de 10 µm), il s'agit du gypse commercialisé par la société Südharzer Gipswerk sous l'appellation « CS-Dihydrat » de formule CaSO₄.2H₂O et comprenant une teneur pondérale en CaSO₄.2H2O supérieure à 90% ;
- pour l'acide tartrique utilisé comme retardateur, on utilise l'acide tartrique sous sa forme (L+) commercialisé en poudre fine par la société Legré Mante, à un taux pondéral de 95% pris en mélange avec 5% de SiO₂ ;
- pour le carbonate de lithium utilisé comme accélérateur, il s'agit du carbonate de lithium en poudre commercialisé par la société Chemetall et de granulométrie inférieure à 100 µm ;
- pour l'épaississant, on utilise du Methocel™ 254 commercialisé par la société Dow^{®} comprenant une teneur de 100% en hydroxypropyl-méthylcellulose ;
- pour la résine redispersable (finesse exprimée en D50 de 60 µm), on utilise le Vinnapas^{®} 5025 L commercialisé par la société Wacker polymers qui est un copolymère en poudre à base d'éthylène et d'acétate de vinyle, dispersable dans l'eau, et présentant une bonne résistance à la saponification ;
- pour l'agent rhéologique (superplastifiant), il s'agit du produit Melflux 2651 F commercialisé par la société BASF à base d'éthers polycarboxyliques modifiés.

Les échantillons 2 et 3 préparés à partir du mortier selon l'invention ont une stabilité volumique excellente étant donné qu'il n'y a pas d'expansion sous eau et peu de retrait à l'air, même 250 jours après la gâchée. Pour ces échantillons la rhéologie et l'aptitude à l'étalement mesurées sont tout à fait satisfaisantes. Aucune ségrégation n'est observée entre le liant et les sables, la pâte reste bien homogène pendant le durcissement. Ces mortiers sont polyvalents et conviennent pour les utilisations ragréage, scellement, réparation ou carrelage.

L'échantillon 1 donné à titre comparatif, avec un fort ratio OPC/C.$.A. (rapport pondéral), montre une forte expansion sous eau (> 2 mm/m) et un fort retrait à l'air, et est donc difficilement exploitable, en particulier, pour les utilisations ragréage, scellement, réparation ou carrelage. En effet, étant donné que de fortes contraintes mécaniques peuvent s'exercer sur le matériau, cela risque d'engendrer la destruction du système par fissuration et décollement.

L'échantillon 4 donné à titre comparatif, qui ne présente aucune source de carbonate métallique, montre un retrait et donc une stabilité volumique non satisfaisante au vu des critères sélectionnés pour les applications recherchées. La rhéologie et la ségrégation ne sont pas satisfaisantes non plus

## Revendications

1. Liant hydraulique à volume stable comprenant, avant gâchage, un clinker de sulfoaluminate de calcium, un ciment Portland, une source de sulfate de calcium, et une source de carbonate métallique formée de grains dont la finesse D50 varie de 1 à 40 µm et choisie parmi au moins une source de carbonate de magnésium et une source de carbonate de calcium, dans les proportions définies ci-après, bornes comprises, exprimées en rapport des masses de ces constituants dans ledit liant :
(Ciment Portland) / (Clinker de sulfoaluminate de calcium) : 0.1 - 1.2,
(Source de sulfate de calcium) / (Clinker de sulfoaluminate de calcium) : 0 - 1.5 en excluant la borne 0
(Clinker de sulfoaluminate de calcium) / (Source de carbonate métallique) : 0.3-4

2. Liant hydraulique selon la revendication 1, tel que le ratio (Ciment Portland) / (Clinker de sulfoaluminate de calcium) varie de 0.20 à 1.

3. Liant hydraulique selon la revendication 1 ou 2, tel que le ratio (Source de sulfate de calcium) / (Clinker de sulfoaluminate de calcium) varie de 0.10 à 1.2, de préférence de 0.13 à 1.

4. Liant hydraulique selon l'une quelconque des revendications précédentes, tel que le ratio (Clinker de sulfoaluminate de calcium) / (Source de carbonate métallique) varie de 0.4 à 3, et de préférence de 0.5 à 2.5.

5. Liant hydraulique selon l'une quelconque des revendications précédentes, tel que le clinker de sulfoaluminate de calcium comprend de la yeelimite dans une teneur variant de 25 à 80 % en poids total dudit clinker, de préférence de 35 à 70 %, et avantageusement de 45 à 65 %.

6. Liant hydraulique selon l'une quelconque des revendications précédentes, tel que le clinker de sulfoaluminate de calcium comprend de la belite dans une teneur inférieure ou égale à 60 % en poids total dudit clinker, de préférence inférieure ou égale à 50 %, et avantageusement inférieure ou égale à 30 %.

7. Liant hydraulique selon l'une quelconque des revendications précédentes, tel que le ciment portland est sélectionné parmi au moins l'un des ciments suivants : un ciment Portland CEM I 52.5 N et R, et un ciment Portland CEM I 42.5

8. Liant hydraulique selon l'une quelconque des revendications précédentes, tel que la source de sulfate de calcium est choisie parmi au moins l'un des constituants suivants : du gypse, de l'hémihydrate, du phosphogypse et de l'anhydrite, de préférence il s'agit du gypse.

9. Liant hydraulique selon l'une quelconque des revendications précédentes, tel que la source de carbonate métallique est choisie parmi au moins l'un des composés suivants : une charge calcaire et la dolomite.

10. Liant hydraulique selon la revendication 9, tel que la source de carbonate métallique est formées de grains dont la finesse D50 varie de 2 à 20 µm, et avantageusement de 4 à 10 µm.

11. Mortier pulvérulent comprenant un liant hydraulique selon l'une des revendications précédentes.

12. Mortier pulvérulent selon la revendication 11, tel qu'il comprend du sable sélectionné parmi des sables de taille de particules variant de 0.05 à 4 mm.

13. Mortier pulvérulent selon l'une des revendications précédentes de mortier tel qu'il comprend:
- de 20 à 60% en poids du liant hydraulique,
- de 35 à 80% en poids de sable(s), notamment siliceux.

14. Mortier pulvérulent selon l'une des revendications précédentes de mortier tel qu'il comprend au plus 40%, voire 30%, en poids du clinker de sulfoaluminate de calcium et de préférence au moins 10% en poids du clinker de sulfoaluminate de calcium.

15. Mortier pulvérulent selon l'une des revendications précédentes de mortier tel qu'il comprend au plus 30%, voire au plus 20%, en poids du ciment Portland et de préférence au moins 0,5% voire au moins 1% en poids du ciment Portland.

16. Mortier pulvérulent selon l'une des revendications précédentes de mortier tel qu'il comprend au plus 10%, voire au plus 5%, en poids de la source de sulfate de calcium, notamment comprenant du gypse, et de préférence au moins 0,5% en poids de la source de sulfate de calcium.

17. Mortier pulvérulent selon l'une des revendications précédentes de mortier tel qu'il comprend au plus 35% voire au plus 20% en poids du carbonate métallique et de préférence au moins 3% en poids du carbonate métallique.

18. Mortier pulvérulent selon l'une des revendications précédentes de mortier tel qu'il comprend
- de 5 à 30% en poids du clinker de sulfoaluminate de calcium,
- de 1 à 30% en poids du ciment Portland,
- de 1 à 8% en poids de la source de sulfate de calcium notamment comprenant du gypse,
- de 5% à 30% en poids de la source de carbonate métallique,
- entre 35% et 60% en poids de sable(s).

19. Utilisation d'un mortier comprenant un liant hydraulique selon l'une des revendications précédentes de mortier pour le ragréage et le lissage des sols, la confection d'ouvrage de nivellement, de chape, le dressage des sols, la réparation d'ouvrage en béton, le scellement d'éléments notamment choisis parmi tiges d'ancrage, piliers, bornes, poteaux, bouches d'égouts, tampons de regards ou le clavage ou le clavetage, et la pose et/ou le jointoiement de carreaux tels que des carreaux de céramique ou de verre.

## Patentansprüche

1. Hydraulisches Bindemittel mit stabilem Volumen, das vor dem Anrühren einen Calciumsulfoaluminat-Klinker, einen Portlandzement, eine Calciumsulfat-Quelle und eine Metallcarbonat-Quelle, die von Körnern gebildet ist, deren Feinheit D50 von 1 bis 40 µm variiert, und die aus wenigstens einer Magnesiumcarbonat-Quelle und einer Calciumcarbonat-Quelle ausgewählt ist, in den nachstehend definierten Verhältnissen, Grenzen eingeschlossen, in Massenverhältnissen dieser Bestandteile in dem Bindemittel ausgedrückt, umfasst:
(Portlandzement) / (Calciumsulfoaluminat-Klinker): 0,1 - 1,2
(Calciumsulfat-Quelle) / (Calciumsulfoaluminat-Klinker): 0 - 1,5 unter Ausschluss der Grenze 0
(Calciumsulfoaluminat-Klinker) / (Metallcarbonat-Quelle): 0,3 - 4.

2. Hydraulisches Bindemittel nach Anspruch 1, welches derart ist, dass das Verhältnis von (Portlandzement) / (Calciumsulfoaluminat-Klinker) von 0,20 bis 1 variiert.

3. Hydraulisches Bindemittel nach Anspruch 1 oder 2, welches derart ist, dass das Verhältnis von (Calciumsulfat-Quelle) / (Calciumsulfoaluminat-Klinker) von 0,10 bis 1,2, vorzugsweise von 0,13 bis 1 variiert.

4. Hydraulisches Bindemittel nach einem der vorhergehenden Ansprüche, welches derart ist, dass das Verhältnis von (Calciumsulfoaluminat-Klinker) / (Metallcarbonat-Quelle) von 0,4 bis 3 und vorzugsweise von 0,5 bis 2,5 variiert.

5. Hydraulisches Bindemittel nach einem der vorhergehenden Ansprüche, welches derart ist, dass der Calciumsulfoaluminat-Klinker Yeelimit in einem Gehalt umfasst, der von 25 bis 80 Gesamtgewichtsprozent des Klinkers, vorzugsweise von 35 bis 70 % und vorteilhafterweise von 45 bis 65 % variiert.

6. Hydraulisches Bindemittel nach einem der vorhergehenden Ansprüche, welches derart ist, dass der Calciumsulfoaluminat-Klinker Belit in einem Gehalt von weniger als oder gleich 60 Gesamtgewichtsprozent des Klinkers, vorzugsweise von weniger als oder gleich 50 % und vorteilhafterweise von weniger als oder gleich 30 % umfasst.

7. Hydraulisches Bindemittel nach einem der vorhergehenden Ansprüche, welches derart ist, dass der Portlandzement aus wenigstens einem der folgenden Zemente ausgewählt ist: einem Portlandzement CEM I 52.5 N und R und einem Portlandzement CEM I 42.5.

8. Hydraulisches Bindemittel nach einem der vorhergehenden Ansprüche, welches derart ist, dass die Calciumsulfat-Quelle aus wenigstens einem der folgenden Bestandteile ausgewählt ist: Gips, Hemihydrat, Phosphorgips und Anhydrit, vorzugsweise handelt es sich um Gips.

9. Hydraulisches Bindemittel nach einem der vorhergehenden Ansprüche, welches derart ist, dass die Metallcarbonat-Quelle aus wenigstens einer der folgenden Verbindungen ausgewählt ist: einem Kalkfüllstoff und Dolomit.

10. Hydraulisches Bindemittel nach Anspruch 9, welches derart ist, dass die Metallcarbonat-Quelle von Körnern gebildet ist, deren Feinheit D50 von 2 bis 20 µm und vorteilhafterweise von 4 bis 10 µm variiert.

11. Pulverförmiger Mörtel, der ein hydraulisches Bindemittel nach einem der vorhergehenden Ansprüche umfasst.

12. Pulverförmiger Mörtel nach Anspruch 11, welcher derart ist, dass er Sand, der aus Sanden mit einer von 0,05 bis 4 mm variierenden Teilchengröße ausgewählt ist, umfasst.

13. Pulverförmiger Mörtel nach einem der vorhergehenden Mörtelansprüche, welcher derart ist, dass er umfasst:
- 20 bis 60 Gew.-% des hydraulischen Bindemittels,
- 35 bis 80 Gew.-% Sand(e), insbesondere kieselsäurehaltige.

14. Pulverförmiger Mörtel nach einem der vorhergehenden Mörtelansprüche, welcher derart ist, dass er höchstens 40, sogar 30 Gew.-% des Calciumsulfoaluminat-Klinkers und vorzugsweise wenigstens 10 Gew.-% des Calciumsulfoaluminat-Klinkers umfasst.

15. Pulverförmiger Mörtel nach einem der vorhergehenden Mörtelansprüche, welcher derart ist, dass er höchstens 30, sogar höchstens 20 Gew.-% des Portlandzements und vorzugsweise wenigstens 0,5, sogar wenigstens 1 Gew.-% des Portlandzements umfasst.

16. Pulverförmiger Mörtel nach einem der vorhergehenden Mörtelansprüche, welcher derart ist, dass er höchstens 10, sogar höchstens 5 Gew.-% der Calciumsulfat-Quelle, welche insbesondere Gips umfasst, und vorzugsweise wenigstens 0,5 Gew.-% der Calciumsulfat-Quelle umfasst.

17. Pulverförmiger Mörtel nach einem der vorhergehenden Mörtelansprüche, welcher derart ist, dass er höchstens 35, sogar höchstens 20 Gew.-% des Metallcarbonats und vorzugsweise wenigstens 3 Gew.-% des Metallcarbonats umfasst.

18. Pulverförmiger Mörtel nach einem der vorhergehenden Mörtelansprüche, welcher derart ist, dass er umfasst
- 5 bis 30 Gew.-% des Calciumsulfoaluminat-Klinkers,
- 1 bis 30 Gew.-% des Portlandzements,
- 1 bis 8 Gew.-% der Calciumsulfat-Quelle, die insbesondere Gips enthält,
- 5 bis 30 Gew.-% der Metallcarbonat-Quelle,
- zwischen 35 und 60 Gew.-% Sand(e).

19. Verwendung eines Mörtels, der ein hydraulisches Bindemittel umfasst, nach einem der vorhergehenden Mörtelansprüche, für die Ausbesserung und das Glätten von Böden, das Erstellen von Einebnungs-, Glattstricharbeiten, die Berichtigung von Böden, die Reparatur von Betonbauten, die Versiegelung von Elementen, die insbesondere aus Verankerungsstangen, Pfeilern, Sperrpfosten, Pfosten, Straßenabläufen, Kanalabdeckungen ausgewählt sind, oder die Verpressung oder die Keilverbindung und das Verlegen und/oder das Verfugen von Fliesen, wie Keramik- oder Glasfliesen.

## Claims

1. A hydraulic binder having a stable volume comprising, before mixing, a calcium sulfoaluminate clinker, a Portland cement, a source of calcium sulfate, and a source of metal carbonate formed of grains, the fineness D50 of which varies from 1 to 40 µm and selected from at least one source of magnesium carbonate and one source of calcium carbonate, in the proportions defined below, limits included, expressed as a ratio of the masses of these constituents in said binder:
(Portland cement)/(calcium sulfoaluminate clinker): 0.1 - 1.2
(Source of calcium sulfate)/ (calcium sulfoaluminate clinker): 0 - 1.5 excluding the limit 0
(Calcium sulfoaluminate clinker)/ (source of metal carbonate): 0.3 - 4

2. The hydraulic binder as claimed in claim 1, such that the (Portland cement)/(calcium sulfoaluminate clinker) ratio varies from 0.20 to 1.

3. The hydraulic binder as claimed in claim 1 or 2, such that the (source of calcium sulfate)/(calcium sulfoaluminate clinker) ratio varies from 0.10 to 1.2, preferably from 0.13 to 1.

4. The hydraulic binder as claimed in any one of the preceding claims, such that the (calcium sulfoaluminate clinker)/(source of metal carbonate) ratio varies from 0.4 to 3, and preferably from 0.5 to 2.5.

5. The hydraulic binder as claimed in any one of the preceding claims, such that the calcium sulfoaluminate clinker comprises yeelimite in a content varying from 25% to 80% by weight of the total weight of said clinker, preferably from 35% to 70%, and advantageously from 45% to 65%.

6. The hydraulic binder as claimed in any one of the preceding claims, such that the calcium sulfoaluminate clinker comprises belite in a content of less than or equal to 60% by weight of the total weight of said clinker, preferably of less than or equal to 50%, and advantageously of less than or equal to 30%.

7. The hydraulic binder as claimed in any one of the preceding claims, such that the Portland cement is selected from at least one of the following cements: a CEM I 52.5 N and R Portland cement and a CEM I 42.5 Portland cement.

8. The hydraulic binder as claimed in any one of the preceding claims, such that the source of calcium sulfate is selected from at least one of the following constituents: gypsum, hemihydrate, phosphogypsum and anhydrite, preferably it is gypsum.

9. The hydraulic binder as claimed in any one of the preceding claims, such that the source of metal carbonate is selected from at least one of the following compounds:
a limestone filler and dolomite.

10. The hydraulic binder as claimed in claim 9, such that the source of metal carbonate is formed of grains, the fineness D50 of which varies from 2 to 20 µm, and advantageously from 4 to 10 µm.

11. A pulverulent mortar comprising a hydraulic binder as claimed in one of the preceding claims.

12. The pulverulent mortar as claimed in claim 11, such that it comprises sand selected from sands having a particle size that varies from 0.05 to 4 mm.

13. The pulverulent mortar as claimed in either of the preceding mortar claims, such that it comprises:
- from 20% to 60% by weight of the hydraulic binder,
- from 35% to 80% by weight of sand(s), especially siliceous sand(s).

14. The pulverulent mortar as claimed in one of the preceding mortar claims, such that it comprises at most 40%, or even 30%, by weight of the calcium sulfoaluminate clinker and preferably at least 10% by weight of the calcium sulfoaluminate clinker.

15. The pulverulent mortar as claimed in one of the preceding mortar claims, such that it comprises at most 30%, or even at most 20%, by weight of the Portland cement and preferably at least 0.5%, or even at least 1%, by weight of the Portland cement.

16. The pulverulent mortar as claimed in one of the preceding mortar claims, such that it comprises at most 10%, or even at most 5%, by weight of the source of calcium sulfate, especially comprising gypsum, and preferably at least 0.5% by weight of the source of calcium sulfate.

17. The pulverulent mortar as claimed in one of the preceding mortar claims, such that it comprises at most 35%, or even at most 20%, by weight of the metal carbonate and preferably at least 3% by weight of the metal carbonate.

18. The pulverulent mortar as claimed in one of the preceding mortar claims, such that it comprises:
- from 5% to 30% by weight of the calcium sulfoaluminate clinker,
- from 1% to 30% by weight of the Portland cement,
- from 1% to 8% by weight of the source of calcium sulfate, especially comprising gypsum,
- from 5% to 30% by weight of the source of metal carbonate,
- between 35% and 60% by weight of sand(s).

19. The mortar comprising a hydraulic binder as claimed in one of the preceding mortar claims, used for resurfacing and smoothing floors, the forming of a leveling or screeding structure, the smoothing over of floors, the repair of a concrete structure, the bedding of elements especially chosen from anchor rods, pillars, bollards, posts, manholes, manhole covers or keying or wedged keying, and the laying and/or jointing of tiles such as ceramic or glass tiles.
